Europäisches Patentamt

European Patent Office

Office européen des brevets

(19)

(11) Publication number : **0 448 504 A1**

## (12) EUROPEAN PATENT APPLICATION

(21) Application number : 91630017.1

(22) Date of filing : 14.03.91

(51) Int. Cl.⁵ : **B23P 19/00, H01R 43/048**

(30) Priority : 20.03.90 IL 93811

(43) Date of publication of application :
25.09.91 Bulletin 91/39

(84) Designated Contracting States :
AT BE CH DE ES FR GB GR IT LI NL SE

(71) Applicant : Shlomo, Amir
Machanayim Street 106
Tel Aviv (IL)

(72) Inventor : Shlomo, Amir
Machanayim Street 106
Tel Aviv (IL)

(74) Representative : Weydert, Robert et al
OFFICE DENNEMEYER S.à.r.l. P.O. Box 1502
L-1015 Luxembourg (LU)

(54) **Machine for performing work operations on workpieces, particularly for crimping terminals on electrical wires.**

(57) The machine for performing work operations on workpieces (12), particularly for crimping terminals on wires, includes a first frame section (4) defining a workpiece station to receive the workpieces (12), a second frame section (6) carrying a power member (14) driven along a power axis (PA) towards and away from the workpiece station, and a middle frame section (8) formed with a weakened portion (8a) at a location laterally of the power axis (PA) and carrying a strain gage (22) to amplify and measure the strain of the weakened portion (8a) upon the engagement of the power member (14) with the workpiece (12).

EP 0 448 504 A1

FIG 2

# MACHINE FOR PERFORMING WORK OPERATIONS ON WORKPIECES, PARTICULARLY FOR CRIMPING TERMINALS ON ELECTRICAL WIRES

The present invention relates to a machine for performing work operations on workpieces. The invention is particularly useful with respect to machines for crimping terminal on electrical wires, and is therefore described below with respect to this application.

Machines for performing work operations on workpieces, particularly for crimping terminals on electrical wires, are usually provided with force measuring means for measuring the force applied by the power member (e.g. crimping die) to the workpiece (e.g.,terminal on the electrical wire), in order to assure proper operation of the machine. One way presently used for measuring the force is to measure the strain, as by the use of a strain gage, experienced by a beam subject to a bending moment as a result of the force applied by the power member to the workpiece. However, when such a measuring technique is used for measuring the force applied by the power member, it is difficult to obtain accurate results because of the relatively small bending of the beam. Moreover, the results usually do not bear a linear relationship to the force. Further, such techniques are very sensitive to the location of the strain gage.

An object of the present invention is to provide a machine having improved force-measuring means in one or more of the above respects.

According to the present invention, there is provided a machine for performing work operations on workpieces, comprising a first frame section defining a workpiece station to receive the work peices; a second frame section carrying a power member driven along a power axis towards and away from said first section to work the work pieces in the workpiece station; and a middle frame section connecting said second frame section to said first frame section; characterized in that said middle frame section includes a weakened portion at a location thereof laterally of said power axis to amplify the strain of said weakened portion upon the engagement of the power member with the workpiece; said middle frame section carrying a strain gage at said weakened portion for measuring the strain thereat.

According to one described embodiment, the middle frame includes a neutral axis laterally of the power axis where no tension or compression is experienced as a result of the engagement of the power member with the workpiece; and the weakened portion of the middle frame section is on the power axis side of the neutral axis, such that the strain experienced thereat is in tension. According to a second described embodiment, the weakened portion of the middle frame section is on the side of the neutral axis opposite to that of the power axis, such that the strain experienced thereat is in compression.

Further embodiments are described wherein the strain gage is carried on the inner face, and outer face, respectively, of the weakened portion of the middle frame section.

For purposes of example, the invention is described in a power press machine, wherein the power member is carried by an upper frame section and is driven by an eccentric ram along a vertical power axis toward and away from the workpiece on the lower frame section. More particularly, in the described preferred embodiment, the power member is a crimping die for crimping a terminal on a wire in the workpiece station of the lower frame section.

A machine constructed in accordance with the foregoing features enables very accurate measurement of the force applied by the power member to the workpiece. Moreover, its results are substantially more linear, and substantially less sensitive to location, than the results available in the previously-mentioned technique where the strain is measured with respect to a beam under a bending moment.

Further features and advantages of the invention will be apparent from the description below.

The invention is herein described, by way of example only, with reference to the accompanying drawings, wherein:

Fig. 1 illustrates a die-crimping machine constructed in accordance with present invention;

Fig. 2 diagramatically illustrates the construction of the machine for accurately measuring the force applied by the crimping die against the workpiece;

Figs. 3 and 4 are diagrams more helpful in explaining the manner in which the force applied by the crimping die can be accurately measured by a strain gage, Fig. 4a being a fragmentary view illustrating a variation; and

Figs. 5,6,7 and 7a are views corresponding to Figs. 2, 3,4 and 4a, respective, illustrating a variation in the construction in the machine frame and in the location of the strain gage for measuring the force applied by the crimping die.

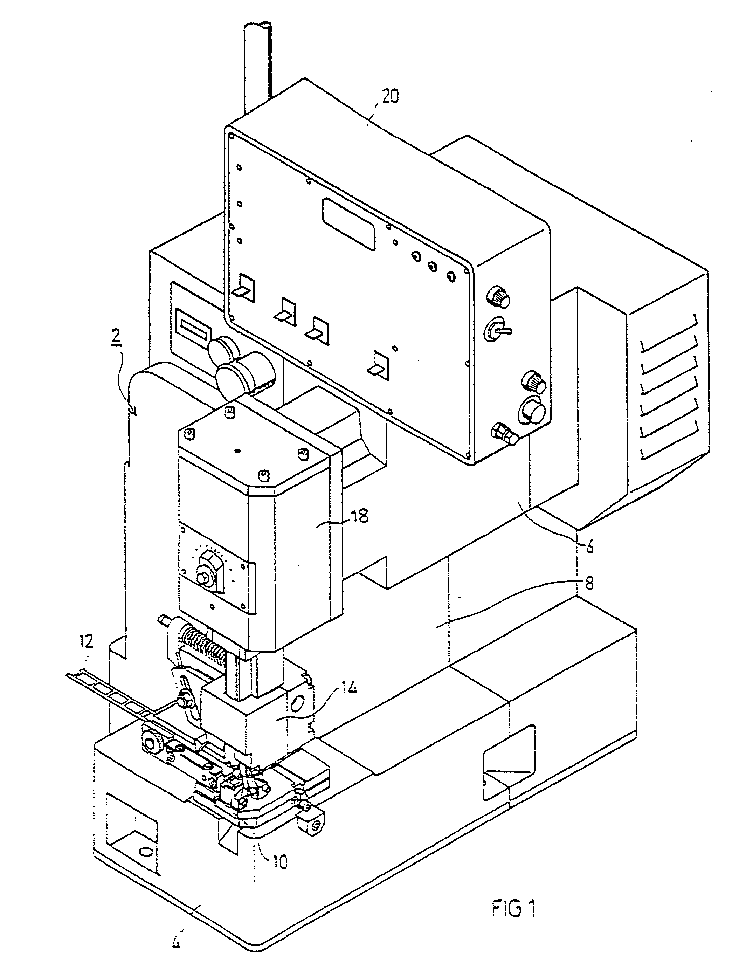

The machine illustrated in the drawings is a power press for crimping terminals on electrical wires. The machine, generally designated 2 in Fig. 1, comprises a lower frame section 4, an upper frame section 6, and a middle frame section 8 connecting the upper frame section 6 to the lower frame section 4.

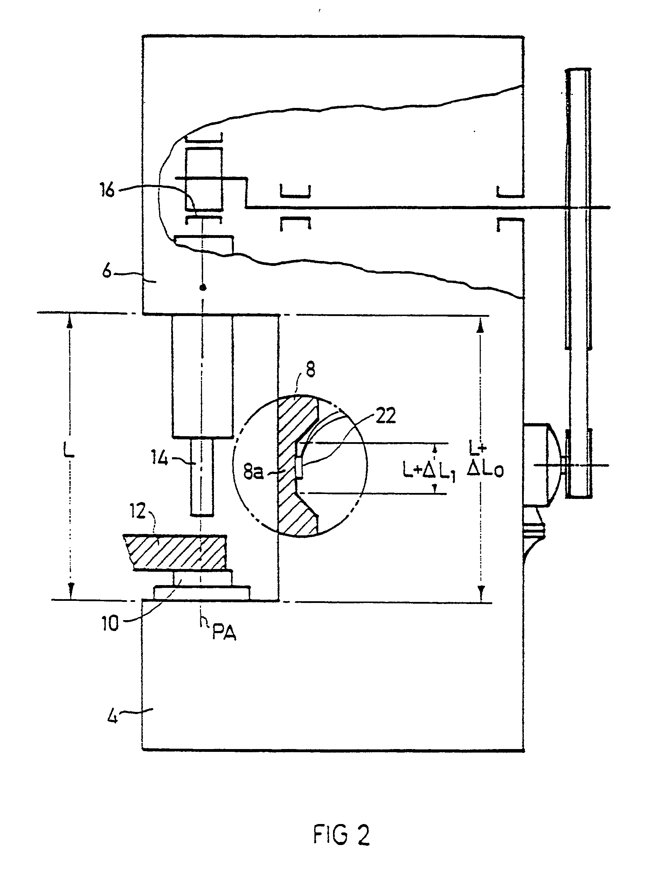

More particularly, the lower frame section 4 includes an anvil 10 defining a work station for receiving the terminals 12 to be crimped on electrical wires (not shown) by means of a crimping die 14 carried by the upper frame section 6. In the conventional construction, the crimping die is driven by an eccentric ram 16 towards and away from anvil 10 along a power axis, shown at PA in Fig. 2. The drive for the eccentric ram is contained within a housing 18 carried by the upper frame section 6. The electronic circuitry for controlling the machine, and for making various measurements during its operation, is contained within a housing 20 also carried by the upper frame section 6. Such crimping machines, insofar as described above, are well known and therefore further details of its construction and operation are not set forth herein.

In accordance with the present invention, the construction of a conventional machine of this type is modified so as to enable relatively accurate linear measurements to be made of the force applied by the crimping die 14 carried by the upper frame section 6, against the terminal 12 and anvil 10 of the lower frame section 4.

For this purpose, the middle frame section 8 includes a weakened portion at a location thereof laterally of the power axis along which the crimping die 14 is driven agains the workpiece 12 and anvil 10; and a strain gage is applied to this weakened portion of the middle frame section for measuring the strain thereat.

This is more particularly illustrated in the diagram of Fig. 2, wherein the power axis is shown PA, and the weakened portion of the middle frame section is shown at 8a. As seen in Fig.2, the weakened portion 8a of the middle frame section is laterally of the power axis PA, and carries a strain gage 22 glued to the weakened portion for measuring the strain thereat.

It will thus be seen that if the middle frame section 8 is in the form of a vertical column of a specified length and thickness, and the weakended portion 8a is reduced in thickness for a part of the length of the vertical column, the strain experienced by the weakened portion 8a, for any particular load, will be many times that experienced by the remainder of the column. It will also be seen that this strain experienced by the weakened portion 8a, in tension, will be substantially linear with the force applied. Accordingly, by applying the strain gage 22 to this weakened portion 8a, a relatively accurate, linear reading of the load will be measured. It will also be seen that the exact location of the strain gage 22 is not critical so long as it is within the weakened portion 8a, and the weakened portion is relatively uniform.

Accordingly, the illustrated machine construction enbles obtaining a measurement of the force applied by the crimping die 14 to the terminal 12 against the anvil 10, which force is relatively accurate, substantially linear, and relatively insensitive to the exact location of the strain gage 22 within the weakened portion 8a of the middle frame section 8.

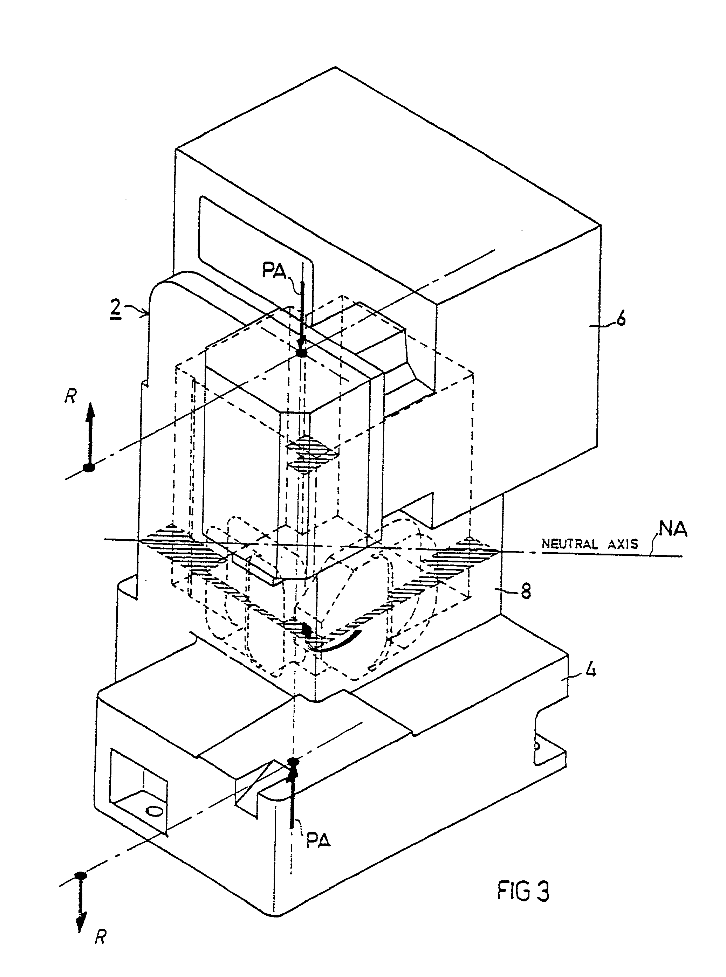

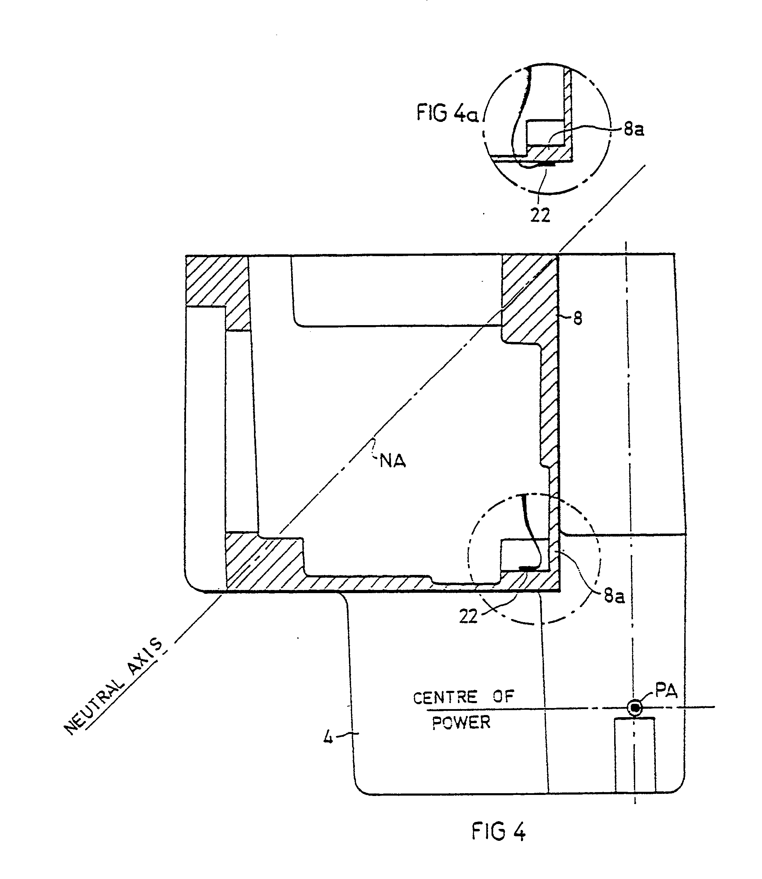

The three-dimensional diagram illustrated in Fig. 3, and the horizontal cross-section illustrated in Fig. 4, more particularly show that the strain experienced by the weakened portion 8a of the middle frame section will be in tension. Thus, Figs. 3 and 4 illustrate the neutral axis NA of the middle frame section 8 where there is neither tension nor compression as a result of the force applied along the power axis PA by the engagement of the crimping die 14 with the workpiece 12 against the anvil 10. In these figures, the strain gage is shown at 22 and is bonded as by gluing, to the inner side of the weakened portion 8a of the middle frame section. It will be seen from Figs. 3 and 4 that the weakened portion 8a of the middle frame section 8, carrying the strain gage 22, is on the power axis PA side of the neutral axis NA, and accordingly the strain experienced at the weakened portion 8a will be in tension.

Fig. 4 illustrates the strain gage 22 applied to the inner face of the weakended portion 8a of the middle frame section 8. The same result can be obtained by applying the strain gage 22 on the outer face of the weakened portion 8a, as shown in Fig. 4a. In both cases, the strain will be in tension and will be substantially linear with the force applied.

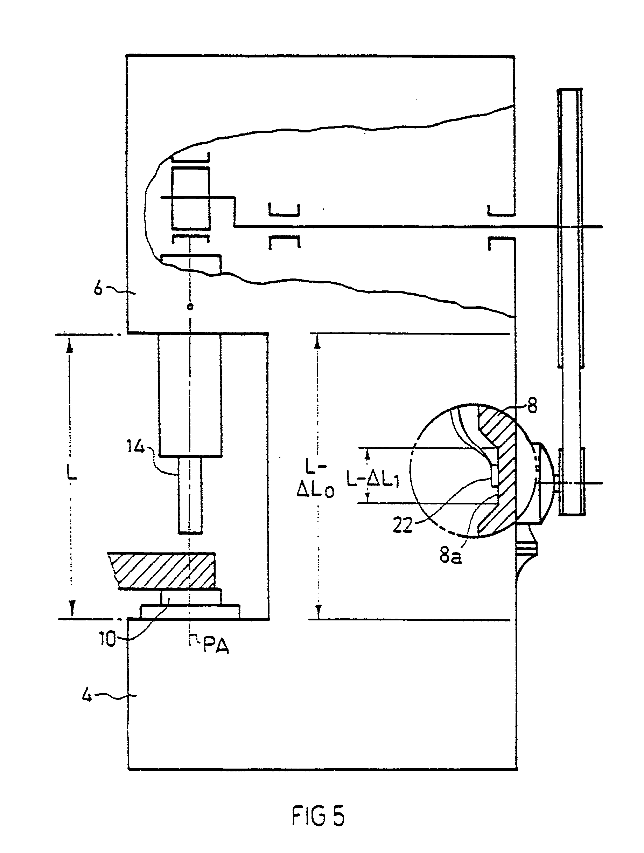

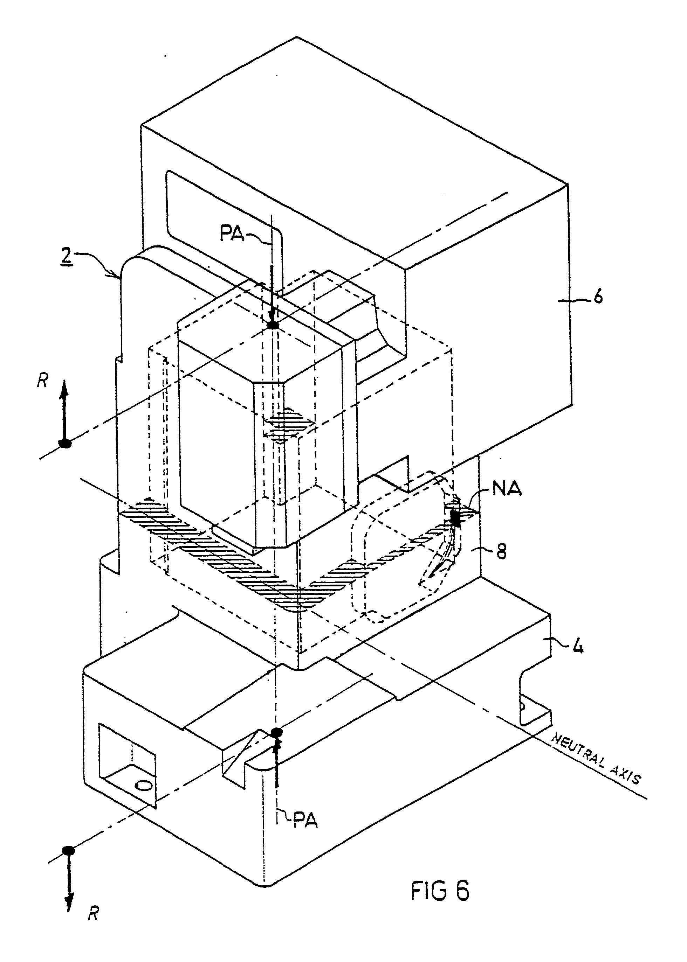

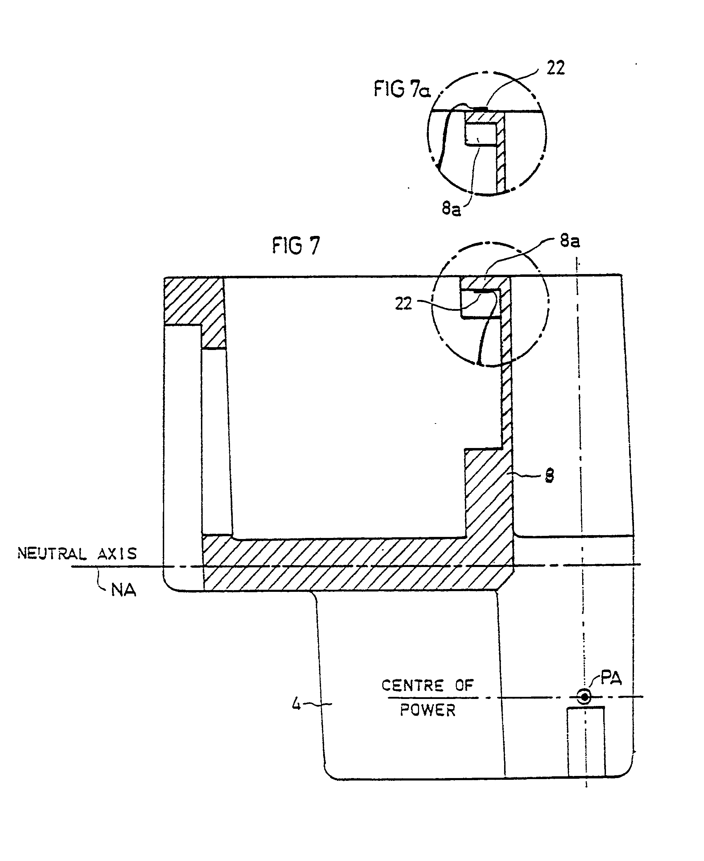

Figs. 5, 6, 7 and 7a are views corresponding to Figs. 2, 3, 4 and 4a, respectively, but showing the weakened portion, therein designated 8a of the middle frame section 8, on the opposite side of the neutral axis NA, namely on the side opposite to that of the power axis PA. In such a case the strain experienced by the strain gage 22 bonded to this weakened portion will be in compression, rather than in tension; but the measurement will again be substantially linear, quite accurate, and relatively insensitive to the exact location of the strain gage with respect to the weakened portion 8a of the middle frame section 8. Figs. 5 and 7 illustrate the strain gage 22 applied to the inner face of the weakened portion 8a, whereas Fig. 7a illustrates the strain gage applied to the outer face of the weakened portion.

It will appreciated that instead of using one set of strain gages, two or more strain gages may be used, e.g. connected in a bridge or other circuit in order to enhance the strain measurements, as well known in the art. It will also be appreciated that the invention could be embodied in other types of machines for performing work operations on workpieces.

## Claims

1. A machine for performing work operations on workpieces, comprising:
    a first frame section defining a workpiece station to receive the workpieces;
    a second frame section carrying a power member driven along a power axis towards and away from said first section to work the work pieces in the workpiece station;
    and a middle frame section connecting said second frame section to said first frame section;

characterized in that said middle frame section includes a weakened portion at a location thereof laterally of said power axis to amplify the strain of said weakened portion upon the engagement of the power member with the workpiece;

said middle frame section carrying a strain gage at said weakened portion for measuring the strain thereat.

2. The machine according to Claim 1, wherein said middle frame section includes a neutral axis laterally of the power axis where no tension or compression is experienced as a result of the engagement of the power member with the workpiece; said weakened portion of the middle frame section being on the power axis side of the neutral axis such that the strain experienced thereat is in tension.

3. The machine according to Claim 1, wherein the middle frame section includes a neutral axis laterally of the power axis where no tension or compression is experienced as a result of the engagement of the power member with the workpiece, said weakened portion of the middle frame section being on the side of the neutral axis opposite to that of the power axis, such that the strain experienced thereat is in compression.

4. The machine according to either of Claims 2 or 3, wherein said strain gage is carried on the inner face of the weakened portion of the middle frame section.

5. The machine according to either of Claims 2 or 3, wherein said strain gage is carried on the outer face of the weakened portion of the middle frame section.

6. The machine according to any one of Claims 1-5, wherein said first frame section is at the upper end of the machine frame, said second frame section is at the lower end of the machine frame, and said power axis is vertical.

7. The machine according to Claim 6, wherein the machine is a power press, said power member carried by said second frame section being driven by an eccentric ram towards and away from the workpiece in said first frame section along said power axis.

8. The machine according to Claim 7, wherein the power member carried by said second frame section is a crimping die for crimping a terminal on a wire in the workpiece station of said first frame

section.

FIG 1

FIG 2

FIG 3

FIG 4a

8a

22

NA

8

NEUTRAL AXIS

8a

22

CENTRE OF
POWER

PA

4

FIG 4

FIG 5

FIG 6

FIG 7a

22

8a

FIG 7

8a

22

8

NEUTRAL AXIS

NA

CENTRE OF
POWER

PA

4

EP 0 448 504 A1

European Patent Office·

**EUROPEAN SEARCH REPORT**

Application Number

| | DOCUMENTS CONSIDERED TO BE RELEVANT | | EP 91630017.1 |
|---|---|---|---|
| Category | Citation of document with indication, where appropriate, of relevant passages | Relevant to claim | CLASSIFICATION OF THE APPLICATION (Int. Cl.5) |
| P,Y | DE - A1 - 4 014 221 (SIEMENS AG) * Claim 8; fig. 2 * -- | 1,2 | B 23 P 19/00 H 01 R 43/048 |
| Y | US - A - 4 856 186 (YEOMANS) * Column 2, lines 28-43; fig. 1,2 * -- | 1,2 | |
| A | DE - A1 - 3 512 969 (DR. STAIGER, MOHILO + CO GMBH) * Claim 1; fig. 3,4,5 * | 1,2 | |
| A | * Claim 1; fig. 3,4,5 * ---- | 3,4,5, 7,8 | |
| | | | **TECHNICAL FIELDS SEARCHED (Int. Cl.5)** |
| | | | B 21 C 51/00 B 21 D 7/00 B 23 P 19/00 B 25 B 23/00 H 01 R 43/00 G 01 L 5/00 |

The present search report has been drawn up for all claims

| Place of search | Date of completion of the search | Examiner |
|---|---|---|
| VIENNA | 14-05-1991 | BISTRICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

13